Europäisches Patentamt

(19) **European Patent Office**

Office européen des brevets

(11) Numéro de publication: **0 209 442**
**B1**

(12) **FASCICULE DE BREVET EUROPEEN**

(45) Date de publication du fascicule du brevet:
**07.06.89**

(51) Int. Cl.⁴: **C10G 11/18, B01J 8/18**

(21) Numéro de dépôt: **86401479.0**

(22) Date de dépôt: **03.07.86**

(54) Procédé et dispositif de craquage catalytique d'hydrocarbures en lit fluidisé et leurs applications.

(30) Priorité: **16.07.85 FR 8510891**

(43) Date de publication de la demande:
**21.01.87 Bulletin 87/4**

(45) Mention de la délivrance du brevet:
**07.06.89 Bulletin 89/23**

(84) Etats contractants désignés:
**BE CH DE FR GB IT LI LU NL**

(56) Documents cités:
**EP-A- 0 073 396**
**EP-A- 0 151 882**
**US-A- 4 411 773**
**US-A- 4 427 537**

(73) Titulaire: **COMPAGNIE DE RAFFINAGE ET DE DISTRIBUTION TOTAL FRANCE: Société Anonyme dite, 5, rue Michel Ange, F-75781 Paris Cédex 16(FR)**

(72) Inventeur: **Mauléon, Jean-Louis, 22, Avenue de l'Abreuvoir, F-78160 Marly-le-Roi(FR)**
Inventeur: **Sigaud, Jean-Bernard, 18, Boulevard de la République, F-92420 Vaucresson(FR)**

(74) Mandataire: **Brot, Philippe et al, CABINET BROT et JOLLY 83, rue d'Amsterdam, F-75008 Paris(FR)**

## Description

La présente invention concerne un procédé amélioré de craquage catalytique en lit fluidisé. Elle concerne plus particulièrement le craquage catalytique d'une charge hydrocarbonée injectée dans la zone de craquage catalytique.

On sait que l'industrie pétrolière utilise de façon usuelle des procédés de craquage, dans lesquels des molécules d'hydrocarbures à hauts poids moléculaires et à point d'ébullition élevé sont scindées en molécules plus petites, qui peuvent bouillir dans des domaines de température plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, qui est maintenu en suspension dans les vapeurs de la charge. Après que l'on ait atteint par craquage la gamme de poids moléculaires désirée, avec un abaissement correspondant des points d'ébullition, la catalyseur est séparé des produis obtenus, strippé, régénéré par combustion du coke formé, puis remis en contact avec la charge à craquer.

Dans les procédés de ce type, la réduction souhaitée des points d'ébullition résulte de réactions catalytiques et thermiques contrôlées : le procédé FCC est naturellement mis en oeuvre de façon à ce que l'unité de craquage soit en équilibre thermique. Autrement dit, l'alimentation en catalyseur chaud régénéré doit être telle qu'elle puisse répondre aux diverses exigences thermiques de la section réactionnelle, à savoir, en particulier :
- le préchauffage de la charge liquide ;
- la vaporisation de cette charge ;
- l'apport de calories exigé par les réactions impliquées, lesquelles globalement, sont endothermiques.

Les développements récents en matière de craquage catalytique ont ainsi montré que des facteurs important de la réaction de craquage sont la rapidité et l'uniformité de la mise en contact de la charge avec les grains de catalyseur, et donc la qualité de l'atomisation et de la vaporisation de cette charge lors de l'injection dans la zone réactionnelle (voir demande de brevet français n° 85 01 703, déposée par la Demanderesse le 7 Février 1985; FR-A-2 576 906, EP-A-191 695).

En effet, les charges à craquer sont généralement injectées dans la zone réactionnelle à une température habituellement comprise entre 80 et 400°C, sous une pression relative de 0,7 à 3,5 bar, tandis que la température du catalyseur régénéré qui arrive dans cette zone peut être de l'ordre de 600 à 950°C.

En particulier, lorsque l'on procède au craquage de charges composées d'hydrocarbures à haut point d'ébullition, contenant notamment des asphaltènes, le catalyseur est injecté de préférence en lit fluidisé dilué dans la zone réactionnelle à des températures qui peuvent monter jusqu'à 950°C; une partie de la quantité de chaleur ainsi apportée permet, dans un premier temps, le craquage thermique instantané des molécules les plus lourdes et les plus instables en molécules plus légères. L'ensemble des molécules de la charge et des grains de catalyseurs ayant alors atteint une température d'équilibre, la réaction de craquage catalytique s'effectue par contact de ces molécules avec les sites actifs du catalyseur.

On a ainsi trouvé que plus la charge hydrocarbonée est lourde, plus la configuration de la zone d'injection de la charge dans le réacteur de craquage catalytique est critique: elle doit permettre un contact optimal, c'est-à-dire homogène et instantané, des hydrocarbures et du catalyseur; en outre, il doit se faire une atomisation pratiquement complète de tout produit non vaporisé, aussi rapidement et aussi près que possible de la zone d'injection.

Dans les dispositifs de craquage catalytique les plus perfectionnés existant à l'heure actuelle, la charge atomisée d'hydrocarbures est injectée à co-courant dans un flux de grains de catalyseurs qui circule dans une zone réactionnelle de forme allongée, généralement appelée élévateur ou "riser", lorsque la charge circule de bas en haut, ou "dropper", dans le cas contraire. Cependant, aussi bonne que soit la qualité de l'atomisation de la charge, les gouttelettes les plus grosses sont entraînées avec le flux de catalyseur et parcourent nécessairement une certaine distance dans la zone réactionnelle ; or, plus cette distance est grande, moins le flux de catalyseur avec lequel la gouttelette est entraînée possède les calories nécessaires à la vaporisation de cette gouttelette. Il s'ensuit, pour les hydrocarbures contenus dans les gouttelettes les plus grosses, soit un cokage excessif, si ces gouttelettes entrent en collision avec des grains de catalyseur, soit un degré de conversion en produits plus léger qui sera diminué, dans le cas contraire.

La présente invention vise, par conséquent, à proposer un procédé de craquage catalytique fluidisé amélioré, qui évite les inconvénients précédents, dans lequel la charge de départ peut être vaporisée presque instantanément par atomisation du liquide en gouttelettes ayant moins de 200 micromètres et, de préférence, moins de 100 micromètres de diamètre, et dans lequel le flux de gouttelettes ainsi formé est injecté à contre-courant du flux de grains de catalyseur.

A cet effet, l'invention a pour objet un procédé de craquage catalytique d'hydrocarbures en lit fluidisé dans lequel les grains de catalyseur sont injectés en phase fluidisée diluée dans une zone réactionnelle de forme allongée, caractérisé en ce que la charge à craquer est injectée à l'état de fines gouttelettes, possédant un diamètre inférieur à 200 micromètres, à contre-courant de sens d'écoulement de la phase fluidisée diluée des grains de catalyseur.

L'invention a également pour objet un dispositif de craquage catalytique d'hydrocarbures en lit fluidisé comprenant une zone réactionnelle de forme allongée, dans laquelle les grains de catalyseur sont injectés en phase fluidisée, caractérisé en ce qu'il comprend des moyens d'injection et de pulvérisation de la charge à craquer à contre-courant de flux de grains de catalyseur en phase fluidisée diluée suivant un angle compris entre 5 et 80° par rapport à l'axe de la zone réactionnelle, ces moyens d'injection étant tels que les gouttelettes de la charge pulvérisée aient un diamètre inférieur à 200 micromètres.

L'invention a enfin pour objet l'application du procédé et du dispositif mentionnés ci-dessus au craquage catalytique de charges d'hydrocarbures en lit fluidisé.

Selon l'invention, les gouttelettes les plus fines de la charge à craquer seront donc vaporisées instantanément et les vapeurs produites entraînées par les grains de catalyseurs vers la zone réactionnelle, tandis que les gouttelettes les plus grosses seront vaporisées plus lentement, mais complètement, puisque leur parcours à contre-courant ne leur permet de rencontrer qu'un flux à température constante de catalyseur complètement régénéré, et donc à une température proche de la température d'injection de ce dernier. Il s'ensuit une meilleure homogénéité du flux de catalyseur et de vapeurs dans la zone réactionnelle, et la durée du contact entre les grains de catalyseur et les vapeurs de la charge devient sensiblement constante, puisqu'au niveau de l'injecteur de charge, toute cette dernière se trouve maintenant vaporisée.

Les caractéristiques et les avantages de l'invention seront exposés plus en détail, en référence aux dessins annexés, sur lesquels :

La figure 1 est une vue schèmatique d'un dispositif conforme à l'invention ;
La figure 2 est une vue analogue d'une variante d'un tel dispositif ;
La figure 3 représente des courbes qui seront explicitées en relation avec un exemple de mise en oeuvre de l'invention.

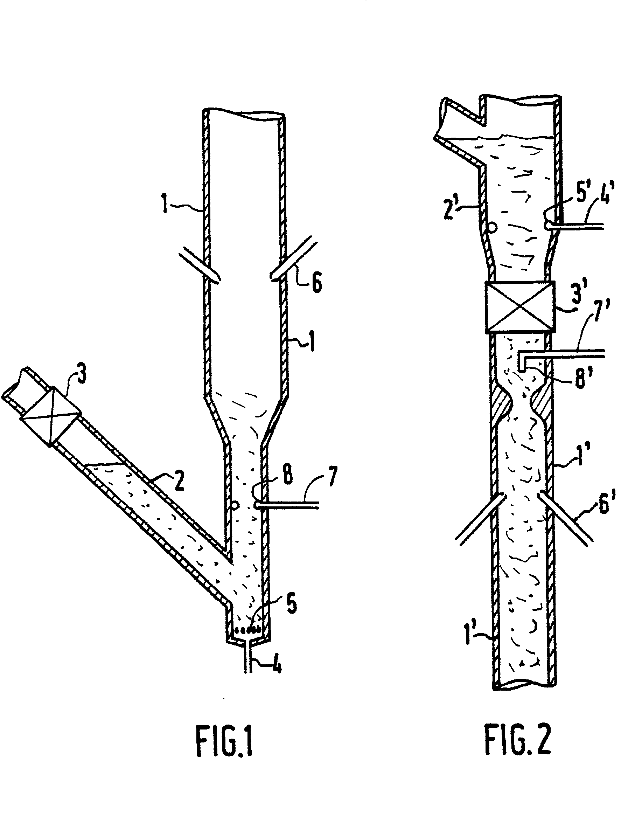

Dans le dispositif représenté sur la figure 1, le catalyseur régénéré est introduit à la base du réacteur 1 du type riser par une ligne 2, en une quantité déterminée par l'ouverture ou la fermeture de la vanne 3. Il est alors mis en lit fluidisé dense par injection, à l'aide d'un premier diffuseur 5, d'un premier fluide gazeux arrivant par la ligne 4. Le catalyseur est ensuite maintenu en phase fluidisée dense et homogène dans la zone réactionnelle par l'injection d'un second fluide gazeux dans le "riser", à l'aide d'un second diffuseur 7, alimenté par la ligne 7 et placé à la partie supérieure du lit dense de catalyseur.

La charge à craquer est introduite, via la ligne 6, par un dispositif approprié de type connu en soi, et injectée à contre-courant du flux de catalyseur montant. A cet effet, les injecteurs,en nombre approprié,sont placés par rapport au riser selon un angle descendant qui peut varier entre 5 et 80° et,de préférence,entre 30 et 60°. A titre de variante, la figure 2 représente un autre dispositif de craquage catalytique conforme à la présente invention, dans laquelle le réacteur 1 ou "dropper" est de type descendant. Sur cette figure, les organes correspondants à ceux déjà décrits en réaction avec la figure 1 sont désignés par les mêmes chiffres de références affectés de l'indice '. Le flux de catalyseur circulant de haut en bas, les injecteurs 6' sont placés cette fois par rapport à l'axe du dropper selon un angle montant qui peut varier entre 5 et 80° et, de préférence, entre 30 et 60°.

Un premier avantage des dispositifs selon la présente invention découle du fait que les gouttelettes les plus grosses de la charge à craquer sont vaporisées de façon beaucoup plus rapide que dans les systèmes d'injection de type classique, puisque, tout au long de leur parcours, elles sont en présence d'un flux dont la température est la température d'injection des grains complètement régénérés. Il s'ensuit une diminution notable des risques de cokage par collision directe avec les grains de catalyseur et une vaporisation complète de la charge au niveau de l'injection et, par conséquent, un taux de conversion plus élevé des vapeurs d'hydrocarbures dans la zone réactionnelle.

Un deuxième avantage des dispositifs selon la présente invention est lié au fait que, le cokage par collision des grains de catalyseur étant moins important, les grains de catalyseur gardent leur activité en vue de la réaction ultérieure de craquage catalytique, ce qui améliore la sélectivité en produits obtenus dans la réaction catalytique.

Le troisième avantage de ces dispositifs est de permettre une mise en contact améliorée des grains de catalyseur avec la charge vaporisée. Il se produit ainsi un transfert thermique quasi-instantané, et la réaction de craquage commence aussitôt à la température requise avec du catalyseur complètement régénéré, qui n'a pas été désactivé par contact avec les fractions les plus légères de la charge. Toutes les molécules de la charge sont donc soumises pendant la même durée (liée à la longueur de la zone réactionnelle) à la réaction catalytique. Il est ainsi possible d'obtenir un taux de conversion meilleur, de même qu'un meilleur indice d'octane de l'essence produite. Il est enfin également possible de diminuer substantiellement la durée du temps de séjour de la charge dans la zone réactionnelle, c'est-à-dire de diminuer la longueur du riser. Cette diminution a pour conséquence :
- d'une part, d'abaisser la perte de charge du réacteur et de permettre ainsi un dimensionnement plus compact de l'unité,
- d'autre part, de réduire le rôle nocif des métaux lourds contenus dans la charge, qui, disposant de moins de temps pour être réduits, sont ainsi partiellement passivés,
- enfin, d'abaisser les coûts de construction du dispositif de craquage.

Un autre avantage du dispositif selon l'invention découle du fait qu'il est possible, grâce à ce dispositif, d'envoyer dans l'unité de craquage catalytique des charges contenant des quantités beaucoup plus grandes de produits lourds et, en particulier, d'asphaltènes : la mise en présence d'un flux homogène de grains de catalyseur très chaud avec la charge d'huiles lourdes finement atomisée, qui est injectée à contre-courant, permet de réaliser une réaction de craquage thermique instantanée des molécules les plus lourdes en molécules plus petites, sans cokéfaction excessive des grains de catalyseur. Ceux-ci, ayant ainsi maintenu leur activité, permettront aux réactions de craquage catalytique des molécules plus petites ainsi formées de se produire dans le riser. Le taux de conversion de l'unité de craquage sera donc notablement amélioré, et les quantités à recycler seront diminuées.

Un autre avantage du dispositif selon l'inventuib résulte du fait que la diminution de la quantité de coke formé, lors de la mise en contact de la charge et du catalyseur, facilite la régénération de ce catalyseur en réduisant le temps de séjour dans le ou les régénérateurs et en y diminuant les possibilités d'apparition de points chauds, qui sont à la fois nuisibles pour le catalyseur et pour l'unité.

Selon une caractéristique particulière du procédé et du dispositif d'injection de la présente invention, la charge hydrocarbonée à craquer peut être introduite à l'état liquide à l'aide d'au moins un dispo sitif de pulvérisation, de façon à ce que le jet de charge atomisée soit introduit dans la zone réactionnelle à contre-courant du flux de grains de catalyseur et selon un angle qui peut varier entre 5 et 80° et de préférence entre 30 et 60°.

Les dispositifs de pulvérisation nécessaires pour pulvériser la charge en gouttelettes de moins de 200 micromètres de diamètre et, de préférence, de moins de 100 micromètres sont d'un type bien connu des spécialistes ; on pourra se référer, à titre d'exemple non limitatif, à la demande de brevet français n° 84 04281, du 20 Mars 1984, déposée par la Demanderesse (FR-A-2 561 539; EP-A-0 157 691)..

Pour assurer une répartition uniforme de la charge atomisée dans la zone réactionnelle, il est considéré comme préférable d'utiliser plusieurs injecteurs espacés à la périphérie du réacteur.

La charge atomisée, injectée à contre-courant dans la zone réactionnelle, sera introduite à une vitesse pouvant varier entre 10 et 600 m/s et, de préférence, entre 50 et 200 m/s. Pour ce faire, la pulvérisation et l'injection à contre-courant pourront être réalisés avantageusement avec l'assistance d'un fluide auxiliaire, qui pourra être de la vapeur d'eau ou des fluides gazeux relativement riches en hydrogène ou en composés hydrogénés en provenance d'autres unités de la raffinerie.

La quantité de fluide auxiliaire requise sera avantageusement comprise entre 0,5 et 20 % en poids par rapport à la charge à craquer.

La température de la charge à craquer lors de son introduction dans la zone réactionnelle pourra enfin varier entre 70 et 400°C.

Le flux de grains de catalyseur dans lequel la charge est injectée à contre-courant sera nécessairement un flux homogène de catalyseur en phase fluidisée diluée, c'est-à-dire ayant une densité généralement comprise entre 15 et 700 kg/m³. La vitesse linéaire de ce flux sera avantageusement comprise entre 0,01 m/s et 10 m/s. Les dispositifs pour réaliser cette phase fluidisée diluée sont d'un type connu des spécialistes; on utilisera cependant avantageusement, lors de l'injection dans un riser, un dispositif du type décrit dans la demande de brevet français no 8 501 703, déposée le 7 Février 1985, au nom de la Demanderesse (FR-A 2 576 906; EP-A 191 695).

Ce flux de grains de catalyseur sera réalisé avantageusement avec l'assistance d'un fluide auxiliaire, qui pourra être constitué par des hydrocarbures possédant cinq ou moins de cinq atomes de carbone ou des mélanges de ceux-ci. Ce flux peut avoir une concentration en hydrogène allant jusqu'à 35% en volume, tandis que l'injection de vapeur d'eau peut se faire jusqu'à concurrence de 10% en poids par rapport à la charge.

Le flux de grains de catalyseur sera introduit à une température qui sera comprise entre 550 et 750°C, lorsque la charge à craquer sera de type classique, telle qu'une charge de gas-oil. Cependant, avec des charges dites lourdes, c'est-à-dire des charges contenant plus de 25% de leur volume composé d'hydrocarbures de point d'ébullition supérieur à 350°C, la température pourra avantageusement être comprise entre 650 et 950°C, de façon à assurer la vaporisation complète des molécules les plus lourdes, ainsi que leur craquage thermique sélectif dans la zone d'injection au réacteur. Dans le cas de ces charges lourdes, la zone réactionnelle sera avantageusement une zone à temps de contact court, de l'ordre de 0,1 à 10 secondes.

La température d'équilibre résultant du mélange du flux de catalyseur avec la charge atomisée et injectée à contre-courant conformément à la présente invention sera ajustée par le choix d'une température appropriée de la charge injectée, ou par tout autre moyen, pour permettre à la réaction catalytique subséquente de se réaliser aux conditions optimales de température, généralement comprise entre 450°C et 550°C suivant les cas.

Une température élevée du flux de catalyseur pourra être obtenue, de façon avantageuse, à l'aide d'un double système de régénération de type connu en soi.

Enfin, les catalyseurs utilisables dans les dispositifs faisant l'objet de la présente invention comprennent les catalyseurs de craquage du type alumino-silicates cristallins et certains types de silice-alumine, de silice-magnésie ou de silice-zirconium, tous ayant des activités de craquage relativement élevées.

Les alumino-silicates cristallins peuvent se trouver à l'état naturel ou être préparés par synthèse, selon des techniques bien connues de l'homme de l'art. Ils peuvent être choisis parmi les zéolithes de synthèse ou les argiles, telles que la faujasite, certaines mordénites, la montmorillonite, les argiles pontées, les alumino-phosphates, ou similaires.

L'exemple qui suit vise à illustrer l'invention et n'a donc, par conséquent, aucun caractère limitatif.

EXEMPLE

Deux essais d'injection ont été réalisés sur une maquette expérimentale représentative de conditions d'injection dans une zone réactionnelle de craquage catalytique.

Dans le premier essai, la charge pulvérisée, constituée de gouttelettes de moins de 100 micromètres de diamètre, est injectée à co-courant dans le flux de catalyseur (injecteur à 45°C par rapport à l'axe du réacteur en moyenne), tandis que, dans le deuxième essai, la même charge est injectée à contre-courant.

<u>Conditions opératoires:</u>

· type de catalyseur: zéolithe
· température d'injection du catalyseur: 815°C,
· densité de la phase fluidisée: 320 kg/m$^3$
· vitesse initiale des grains: 2,0 m/s,
· type de la charge: résidu atmosphérique de charge de type "Arabe lourd" hydrotraité,
· température de la charge: 120°C,
· diamètre des gouttelettes: 100 microns maximun,
· vitesse d'injection des gouttelettes: 150 m/s.

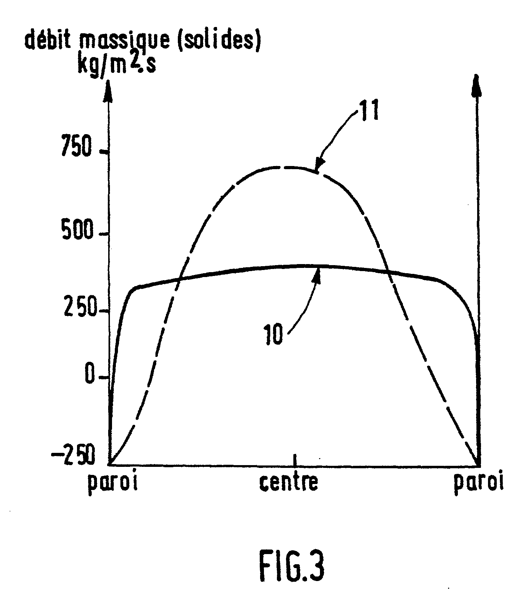

La figure 3 illustre le débit massique de la charge, exprimé en kg/m$^2$ sec, en différentes positions de la section transversale des réacteurs.

L'examen des courbes de cette figure 3 montre que l'injection des gouttelettes à contre-courant (courbes 10 en trait plein) du flux de grains de catalyseur permet une homogénéisation des débits massiques dans la zone d'injection, par rapport à l'injection des gouttelettes à co-courant (courbe 11 en pointillés), ce qui ne peut être réalisé que grâce à une vaporisation quasi-instantanée de la charge hydrocarbonée.

**Revendications**

1. Procédé de craquage catalytique d'hydrocarbures en lit fluidisé, dans lequel les grains de catalyseurs sont injectés en phase fluidisée diluée dans une zone réactionnelle de forme allongée, caractérisé en ce que la charge à craquer est injectée à l'état de fines gouttelettes, possédant un diamètre inférieur à 200 micromètres, à contre-courant du sens d'écoulement de la phase fluidisée diluée des grains de catalyseur.

2. Procédé selon la revendication 1, caractérisé en ce que les gouttelettes sont introduites à contre-courant avec une vitesse comprise entre 10 m/s et 600 m/s.

3. Procédé selon la revendication 2, caractérisé en ce que la charge est injectée à une température comprise entre 70 et 400°C.

4. Procédé selon l'une des revendications 1 à 3, caractérisé en ce que le flux de grains de catalyseur est injecté dans la zone réactionnelle sous forme d'une phase fluidisée diluée de densité comprise entre 15 et 700 g/cm$^3$, à une vitesse comprise entre 0,01 et 10 m/s.

5. Procédé selon la revendication 1 ou 2, caractérisé en ce que l'injection est réalisée en présence d'un fluide gazeux auxiliaire.

6. Dispositif de craquage catalytique d'hydrocarbures en lit fluidisé comprenant une zone réactionnelle de forme allongée, dans laquelle les grains de catalyseur sont injectés en phase fluidisée, caractérisé en ce qu'il comprend des moyens d'injection et de pulvérisation de la charge à craquer à contre-courant du flux de grains de catalyseur en phase fluidisée diluée suivant un angle compris entre 5 et 80° par rapport à l'axe de la zone réactionnelle, ces moyens d'injection étant tels que les gouttelettes de la charge pulvérisée aient un diamètre inférieur à 200 micromètres.

7. Dispositif selon la revendication 6, caractérisé en ce que les moyens d'injection de la charge à craquer sont disposés de façon telle que le ou les flux de charge pulvérisée injectée font un angle compris entre 30 et 60° avec l'axe de la zone réactionnelle.

8. Procédé selon l'une des revendications 1 à 5, appliqué au craquage catalytique d'une charge du type du gas-oil, caractérisé en ce que les grains de catalyseur sont injectés dans la zone réactionnelle à une température comprise entre 550°C et 750°C.

9. Procédé selon l'une des revendications 1 à 5, appliqué au craquage catalytique des charges lourdes d'hydrocarbures pétroliers, dont au moins 25% en volume est composé d'hydrocarbures de point d'ébullition supérieur à 350°C, caractérisé en ce que les grains de catalyseur sont injectés dans la zone réactionnelle à une température comprise entre 650 et 950°C.

10. Procédé selon la revendication 9, caractérisé en ce que la zone réactionnelle est une zone à temps de contact court, de l'ordre de 0,1 à 10 secondes.

**Claims**

1. A process for the catalytic cracking of hydrocarbons in a fluidised bed, in which the catalyst particles are injected in a dilute fluidised phase into a reaction zone of elongate shape, characterised in that the charge to be cracked is injected, as fine droplets of a diameter of less than 200 micrometres, countercurrently to the direction of flow of the dilute fluidised phase of the catalyst particles.

2. A process according to claim 1, characterised in that the droplets are introduced countercurrently at a velocity of between 10 m/s and 600 m/s.

3. A process according to claim 2, characterised in that the charge is injected at a temperature of between 70 and 400°C.

4. A process according to any of claims 1 to 3, characterised in that the flow of catalyst particles is injected into the reaction zone in the form of a dilute fluidised phase of a density of between 15 and 700 g/cm3, at a velocity of between 0.01 and 10 m/s.

5. A process according to claim 1 or 2, characterised in that injection is carried out in the presence of an auxiliary gaseous fluid.

6. An apparatus for the catalytic cracking of hydrocarbons in a fluidised bed, comprising a reaction zone of elongate shape, into which the catalyst particles are injected in a fluidised phase, characterised in that it comprises means for injecting and atomising the charge to be cracked countercurrently to the flow of catalyst particles in a dilute fluidised phase at an angle of between 5 and 80° in relation to the axis of the reaction zone, these injection means being such that the droplets of the atomised charge have a diameter of less than 200 micrometres.

7. An apparatus according to claim 6, characterised in that the means for injecting the charge to be cracked are so arranged that the atomised flow or flows of charge injected from an angle of between 30 and 60° with the axis of the reaction zone.

8. A process according to any of claims 1 to 5, applied to the catalytic cracking of a charge of gas-oil type, characterised in that the catalyst particles are injected into the reaction zone at a temperature of between 550°C and 750°C.

9. A process according to any of claims 1 to 5, applied to the catalytic cracking of heavy charges of petroleum hydrocarbons, of which at least 25% by volume is composed of hydrocarbons having a boiling point above 350°C, characterised in that the catalyst particles are injected into the reaction zone at a temperature of between 650°C and 950°C.

10. A process according to claim 9, characterised in that the reaction zone is a zone with a short contact time, of the order of 0.1 to 10 seconds.

## Patentansprüche

1. Verfahren für das katalytische Wirbelschichtkracken von Kohlenwasserstoffen, wobei die Katalysatorkörner in verdünnter Wirbelschichtphase in eine Reaktionszone von langgestreckter Form eingeblasen werden, dadurch gekennzeichnet, daß die zu krackende Charge im Zustand feiner Tröpfchen mit einem Durchmesser kleiner als 200 Mikrometer im Gegenstrom zur Strömungsrichtung der verdünnten Wirbelschichtphase der Katalysatorkörner eingespritzt wird.

2. Verfahren nach Anspruch 1, dadurch gekennzechnet, daß die Tröpfchen im Gegenstrom mit einer Geschwindigkeit zwischen 10 m/s und 600 m/s eingeführt werden.

3. Verfahren nach Anspruch 2, dadurch gekennzeichnet, daß die Charge mit einer Temperatur zwischen 70 und 400°C eingespritzt wird.

4. Verfahren nach einem der Ansprüche 1 bis 3, dadurch gekennzeichnet, daß der Strom von Katalysatorkörnern in Form einer verdünnten Wirbelschichtphase mit einer Dichte zwischen 15 und 700 g/cm3 in die Reaktionszone mit einer Geschwindigkeit zwischen 0,01 und 10 m/s eingeblasen wird.

5. Verfahren nach Anspruch 1 oder 2, dadurch gekennzeichnet, daß das Einspritzen in Gegenwart eines gasförmigen Hilfsströmungsmittels erfolgt.

6. Einrichtung für das katalytische Wirbelschichtkracken von Kohlenwasserstoffen, die eine Reaktionszone von langgestreckter Form aufweist, in welche die Katalysatorkörner in Wirbelschichtphase eingeblasen werden, gekennzeichnet durch Mittel zum Einspritzen und Zerstäuben der zu krackenden Charge im Gegenstrom zum Strom von Katalysatorkörnern in verdünnter Wirbelschichtphase in einem Winkel zwischen 5 und 80° bezüglich der Achse der Reaktionszone, wobei die Mittel zum Einspritzen so ausgebildet sind, daß die Tröpfchen der zerstäubten Charge einen Durchmesser kleiner als 200 Mikrometer aufweisen.

7. Einrichtung nach Anspruch 6, dadurch gekennzeichnet, daß die Mittel zum Einspritzen der zu krackenden Charge so angeordnet sind, daß der Strom oder die Ströme eingespritzter zerstäubter Charge mit der Achse der Reaktionszone einen Winkel zwischen 30 und 60°C einschließt bzw. einschließen.

8. Verfahren nach einem der Ansprüche 1 bis 5, angewendet auf das katalytische Kracken einer Charge vom Gasöltyp, dadurch gekennzeichnet, daß die Katalysatorkörner mit einer Temperatur zwischen 550°C und 750°C in die Reaktionszone eingeblasen werden.

9. Verfahren nach einem der Ansprüche 1 bis 5, angewendet auf das katalytische Kracken der schweren Chargen von Erdölkohlenwasserstoffen, welche zu mindestens 25 Vol.-% aus Kohlenwasserstoffen mit einem Siedepunkt höher als 350°C bestehen, dadurch gekennzeichnet, daß die Katalysatorkörner mit einer Temperatur zwischen 650 und 950°C in die Reaktionszone eingeblasen werden.

10. Verfahren nach Anspruch 9, dadurch gekennzeichnet, daß es sich bei der Reaktionszone um eine Zone mit kurzer Kontaktzeit in der Größenordnung von 0,1 bis 10 Sekunden handelt.

EP 0 209 442 B1

FIG.1

FIG.2

FIG.3